(19)

**Europäisches Patentamt**
**European Patent Office**
**Office européen des brevets**

(11) **EP 3 466 712 B1**

(12) **EUROPEAN PATENT SPECIFICATION**

(45) Date of publication and mention
of the grant of the patent:
**05.08.2020 Bulletin 2020/32**

(51) Int Cl.:
**B42D 25/328** (2014.01)      **G02B 5/18** (2006.01)

(21) Application number: **17866057.7**

(86) International application number:
**PCT/RU2017/000775**

(22) Date of filing: **23.10.2017**

(87) International publication number:
**WO 2018/080342 (03.05.2018 Gazette 2018/18)**

(54) **MICRO-OPTIC SYSTEM FOR FORMING VISUAL IMAGES WITH KINEMATIC EFFECTS OF MOVEMENT**

MIKROOPTISCHES SYSTEM ZUR FORMUNG VISUELLER BILDER MIT KINEMATISCHEN EFFEKTEN VON BEWEGUNG

SYSTÈME MICRO-OPTIQUE POUR FORMER DES IMAGES VISUELLES À EFFETS DE MOUVEMENT CINÉMATIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.10.2016 EA 201700160**

(43) Date of publication of application:
**10.04.2019 Bulletin 2019/15**

(73) Proprietor: **Computer Holography Centre
Moscow, g. Zelenograd 124460 (RU)**

(72) Inventors:
• **GONCHARSKIY, Alexander Vladimirovich
Moscow 117321 (RU)**

• **GONCHARSKIY, Anton Alexandrovich
Moscow 117321 (RU)**
• **DURLEVICH, Svyatoslav Radomirovich
Moscow 119571 (RU)**
• **MELNIK, Dmitry Vladimirovich
Moscow 109125 (RU)**

(74) Representative: **Jeck, Anton
Jeck & Fleck
Patentanwälte
Klingengasse 2
71665 Vaihingen/Enz (DE)**

(56) References cited:
**EP-B1- 1 297 365      WO-A1-2014/124781
EA-A1- 201 070 011      EA-A1- 201 400 490
EA-B1- 020 989      US-B2- 8 133 638**

EP 3 466 712 B1

## Description

### Field of the invention

The micro-optical system for the formation of visual images claimed as invention belongs mostly to the class of devices used to authenticate the products, and it can be efficiently used for protecting bank notes, securities, bank cards, excise, identification, and control stamps, and various consumer goods against counterfeit.

### Background

Currently, optical technologies are widely used to combat counterfeit. The first optical security elements (holograms) appeared more than 20 years ago (Optical Document Security, Third Edition, Rudolf L. Van Renesse, Artech House, Boston, London, 2005). Optical security elements may incorporate security features designed for both visual and expert control. Devices have been developed for visualization of hidden security features (patent for industrial design RU 64311). There are devices for automated control of security holograms (patent EA018419 (B1) "Method of protection and identification of optical security labels (options) and a device for its implementation", 2013). Currently, the most important task is the development of visual security features. Visual security features must meet the following criteria: The security feature must be easy to control visually;

1) The control procedure must be very simple and require no additional skills on the part of the controller;

2) The optical element must be effectively protected against counterfeit.

Until recently, visual security features were meant for highly skilled experts using dedicated equipment. It is now a crucial task to develop easy-to-control and effectively counterfeit-proof visual features. Such features include visual effects of the motion of image fragments (kinematic effects) observed when the optical element is tilted.

One of such features us the visual security feature formed by "Mobile" micro-optical system described in patent (patent EA017394519(B1)). When illuminated by white light the visual two-dimensional image formed by "Mobile" micro-optical system consists of separate dots, which change their positions when the optical element is tilted. "Mobile" optical elements are synthesized with off-axis Fresnel lenses with diameters of up to 2 mm and with a parabolic-type of saddle-type phase function. When the optical element is illuminated with white light each lens forms one point of the image, and this circumstance limits the potential of "Mobile"-type elements for the formation of images.

As far as the set of features is concerned, the closest invention to the claimed invention (prototype) is the micro-optical system "Motion" (US Pat. No. 7468842 (B2)). Like the claimed invention, micro-optical systems "Motion" also form a 2D image with kinematic effects of motion. The "Motion" micro-optical system consists of two layers. One of the layers is an array of refractory microlenses, and the second layer, which is located under the microlens array, consists of microimages. The "Motion" system uses short-focus lenses. The shift of the visual image results from the observer seeing different fragments of microimages from different directions. Any refractive lens possesses this property. The shortcomings of the "Motion" micro-optical systems include their fairly large thickness, which is determined primarily by the thickness of the layer of refractory microlenses, and difficult its use for protecting bank notes, documents, securities. Another disadvantage of the "Motion" microsystem is the relatively narrow range of kinematic effects of motion of image fragments.

Unlike the prototype, the claimed micro-optical system is a flat optical element where the images are formed by the microrelief with a depth of a fraction of a micron.

Document WO 2014/124781 A1 discloses a micro-optical system according to the preamble of claim 1.

### Disclosure of the invention (Summary of the invention)

The aim of this invention is to improve the security function of the means used for authenticating bank notes, plastic cards, and securities, and to reduce the thickness of the optical security element with kinematic effects of motion compared to the prototype, and extend the range of kinematic effects of the motion of image fragments. The task is fulfilled by developing micro-optical systems in the form of a single-layer diffractive optical element for the formation of images with kinematic effects of motion.

The objective and the said technical result are achieved by the micro-optical system described in claims 1-4.

According to claim 5, the micro-optical system as described in claims 1-4 has in each elementary area $G_{ij}$ a distinguished area $G'_{ij}$ with the size no greater than 40 microns into which diffraction gratings with different orientations and periods smaller than 0.8 micron are recorded so that at large diffraction angles -- greater than 60° -- the observer sees another color image on the entire area of the optical element.

The micro-optical system for the formation of visual images with kinematic effects of motion as described in claims 1-5 can be made with the possibility of partial reflection and partial transmission of light.

If necessary, the micro-optical system of the formation of visual images can be made in the form of a security label used to protect bank notes, securities, documents, plastic cards, bank pay cards, excise, identification, and control stamps, and various consumer goods against counterfeit.

The set of the above essential features ensures the achievement of the claimed technical result.

**Brief description of the figures (drawings)**

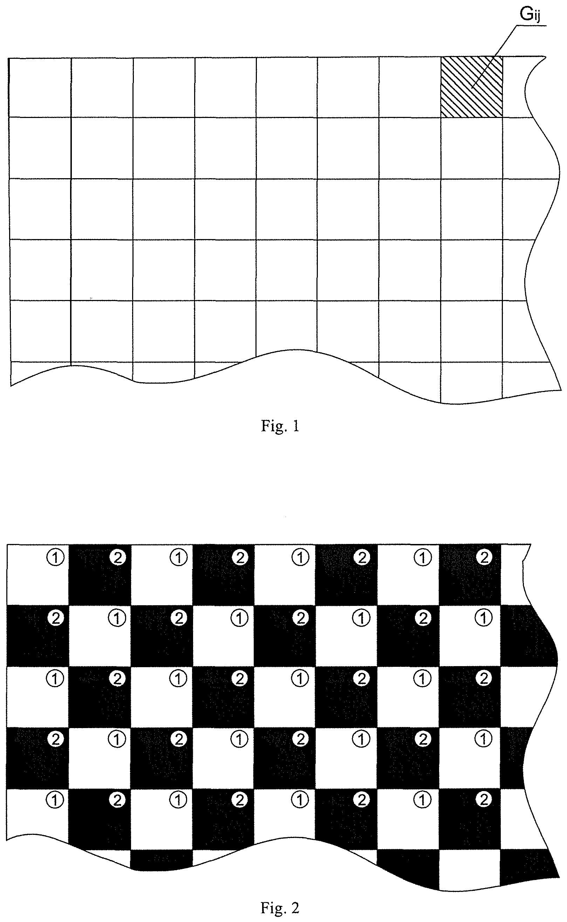

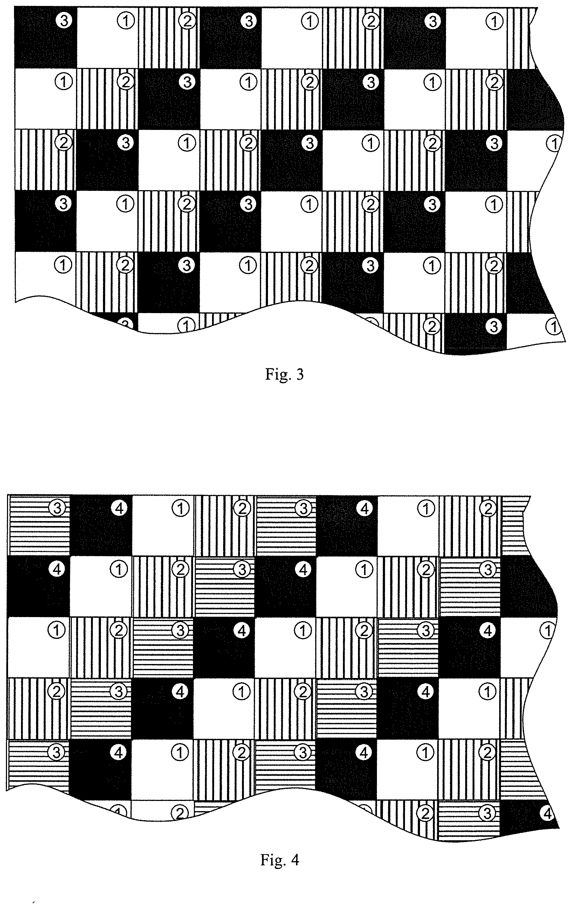

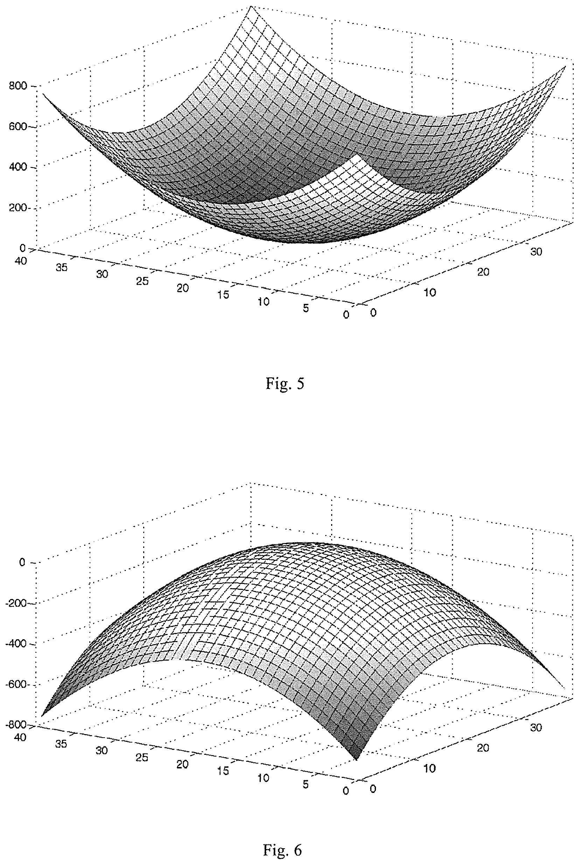

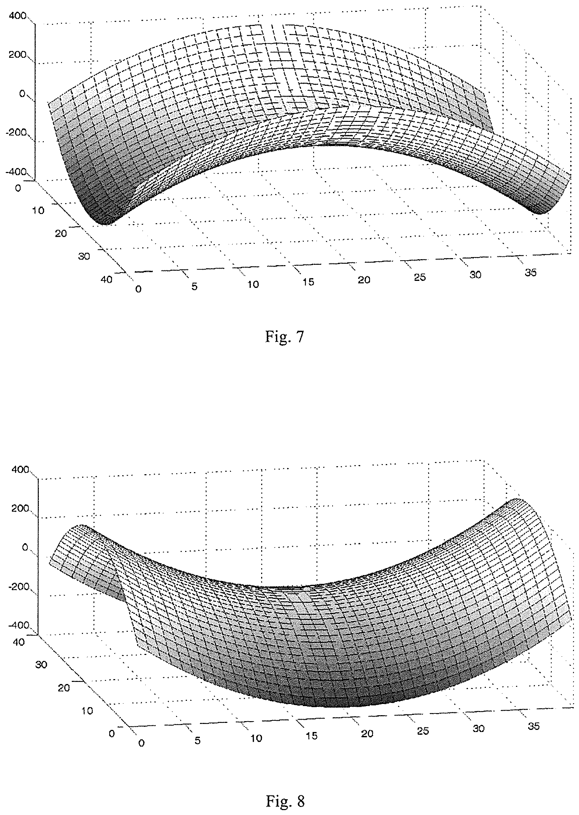

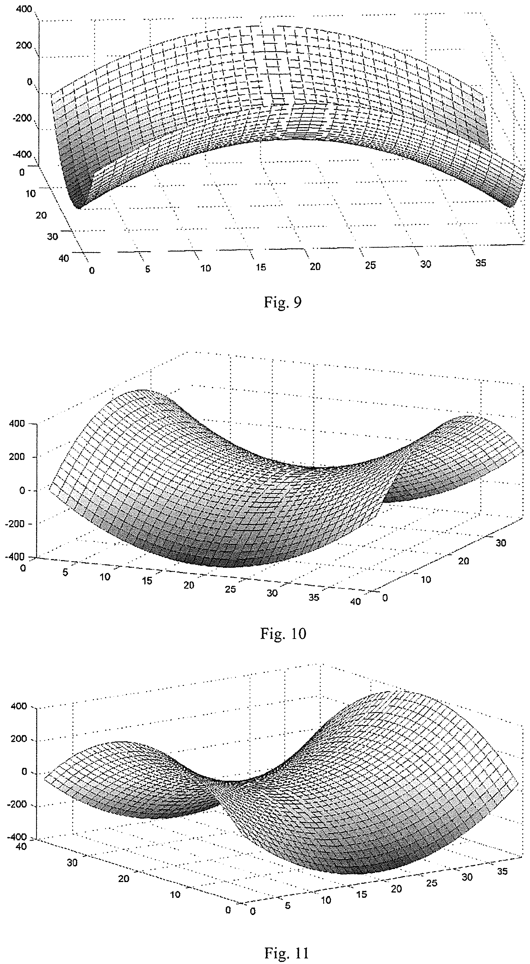

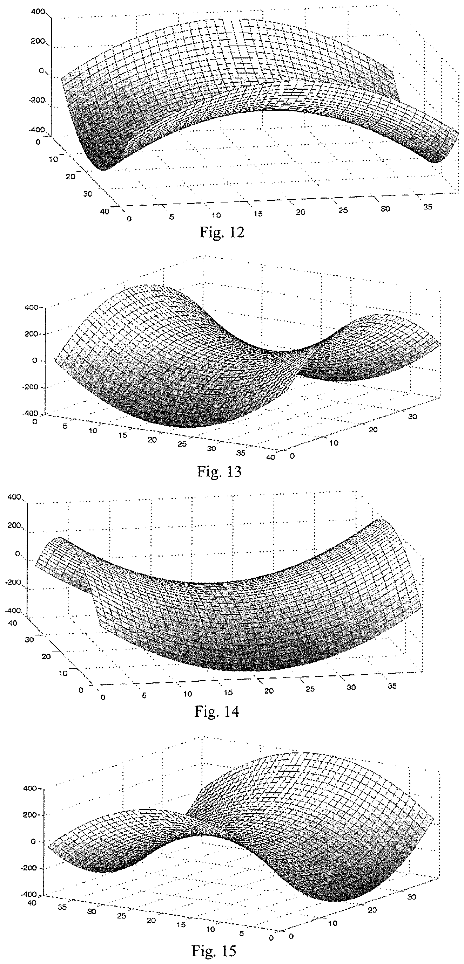

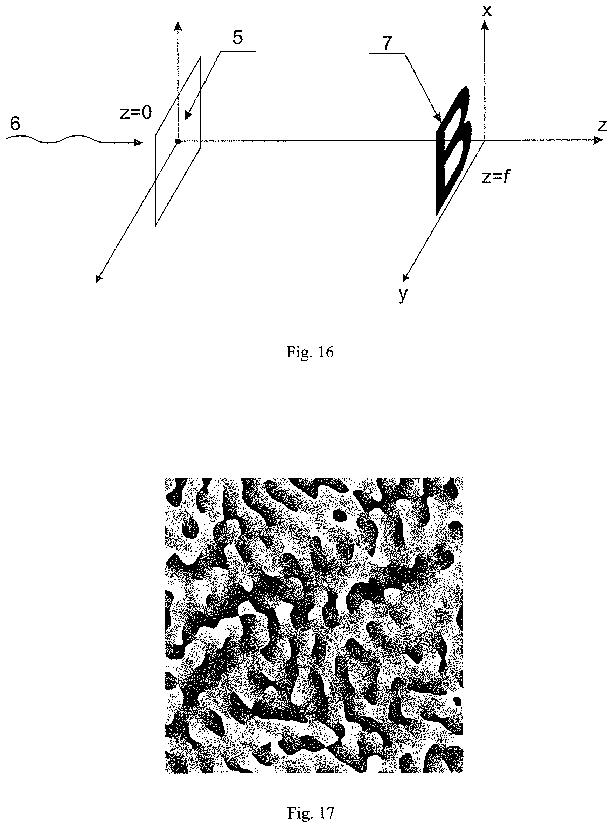

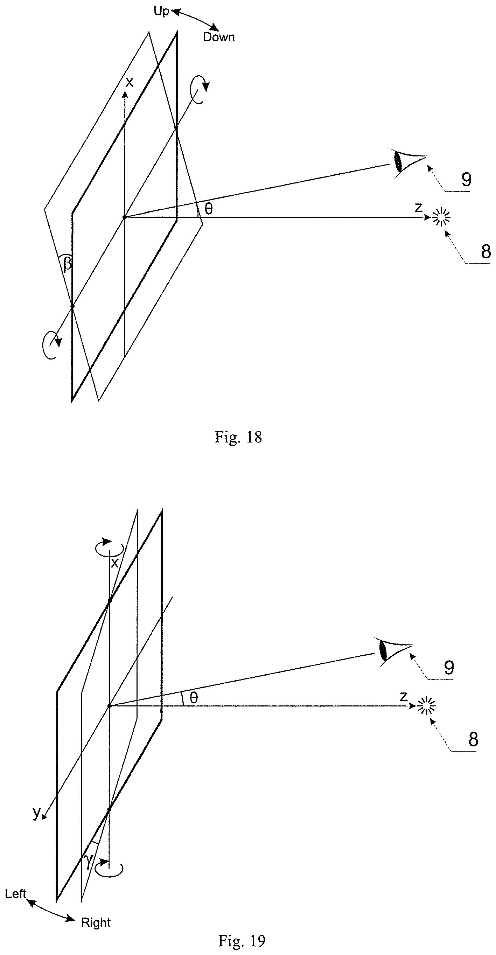

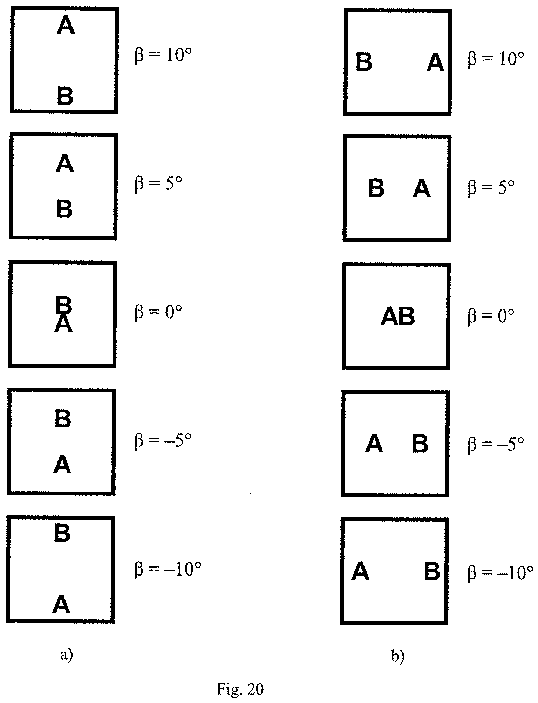

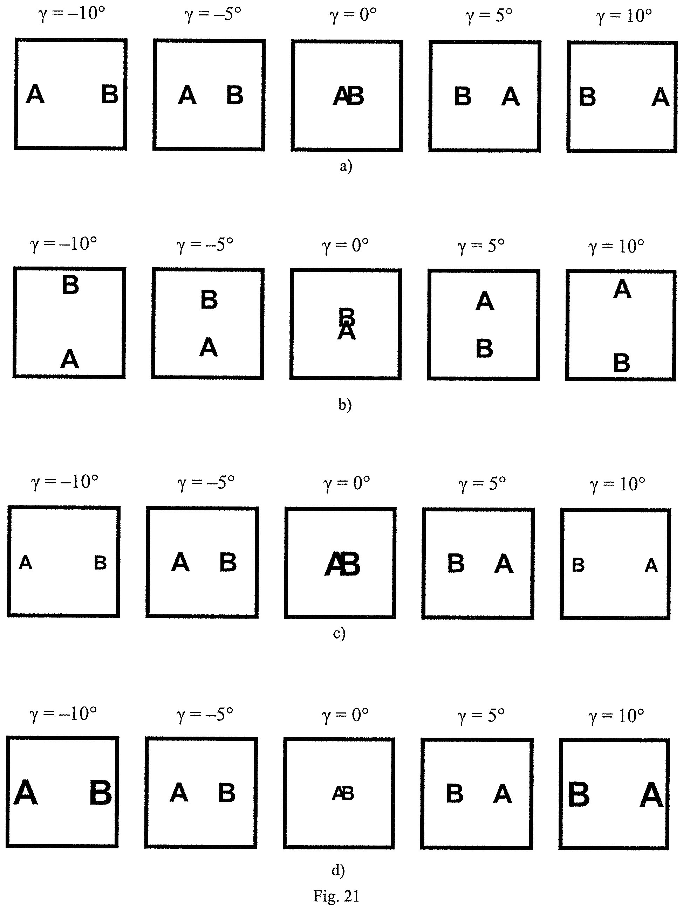

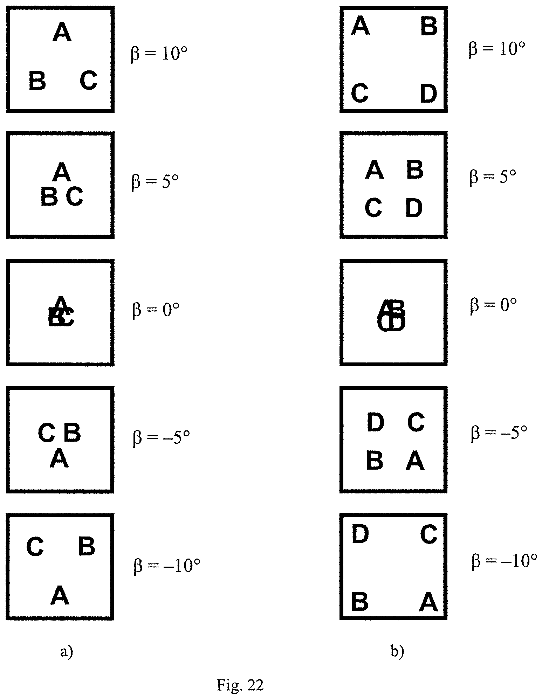

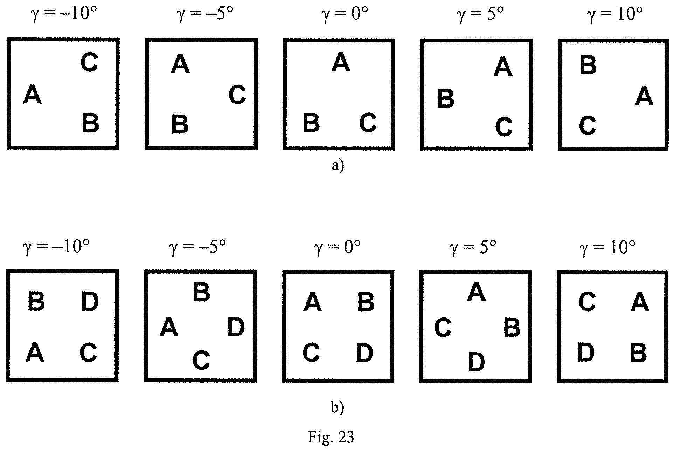

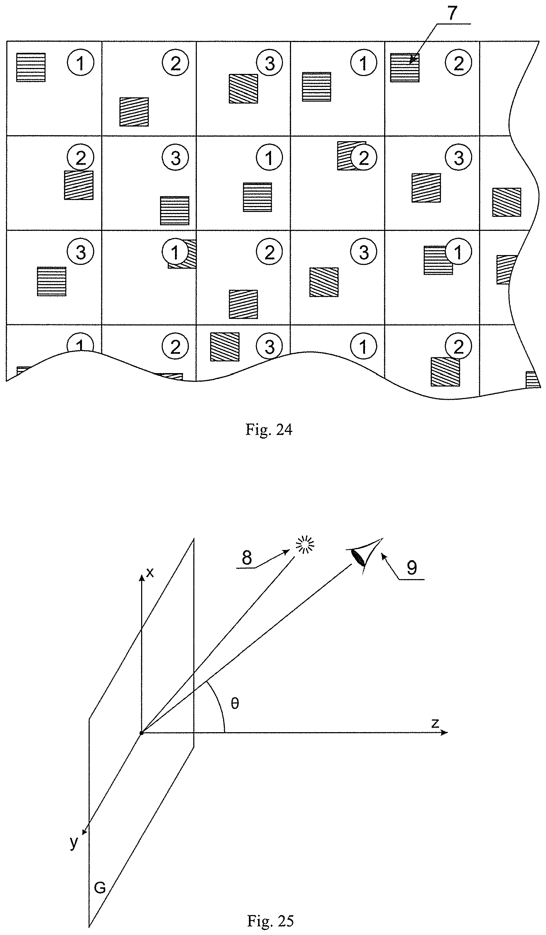

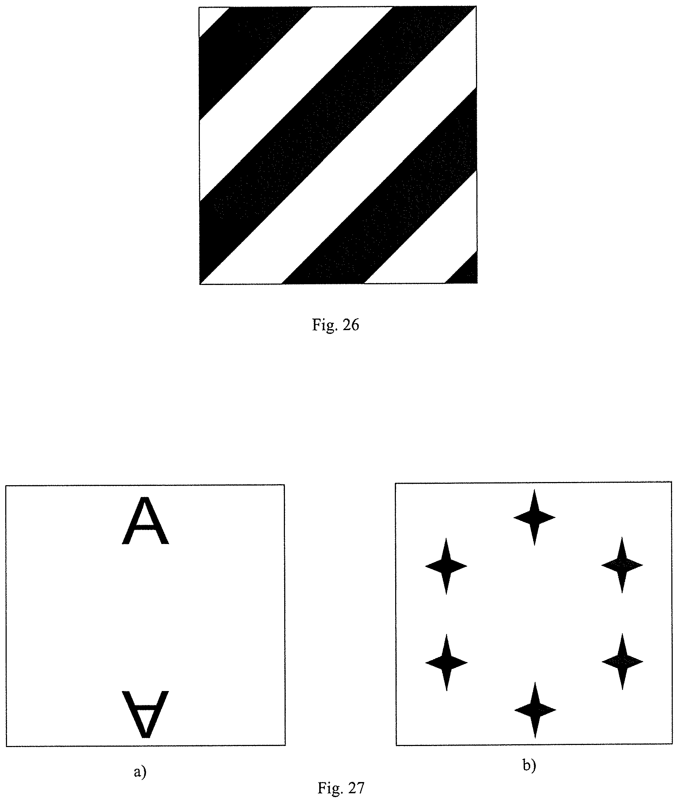

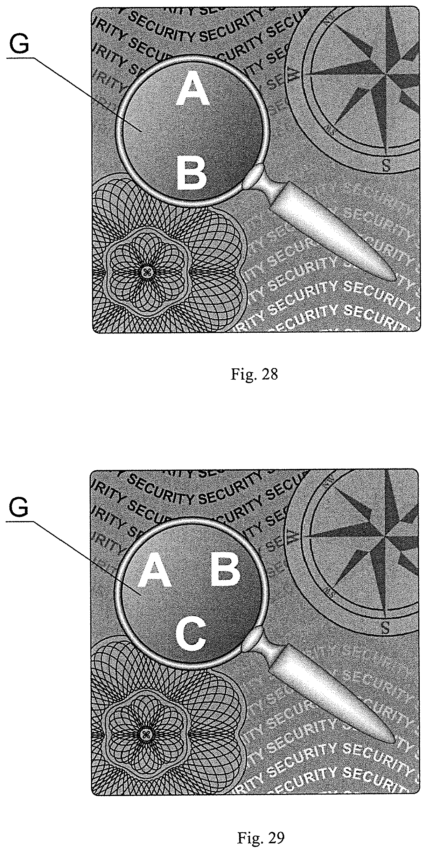

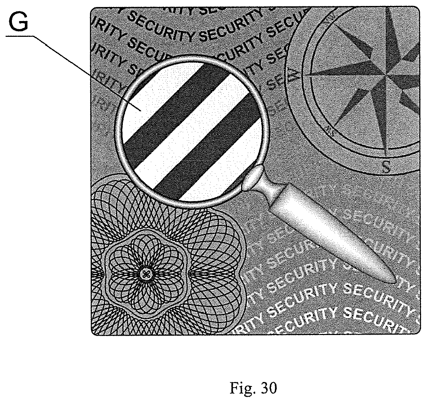

The gist of the invention is explained by figures. Fig. 1 shows the scheme of the partition of the optical element into areas $G_{ij}$. Fig. 2 shows the arrangement of two areas $G^{(1)}$ and $G^{(2)}$ in the optical element region in accordance with claims 1 and 2. Fig. 3 shows the arrangement of three areas $G^{(1)}$, $G^{(2)}$, and $G^{(3)}$ in the optical element region in accordance with claim 3. Fig. 4 shows the arrangement of four areas $G^{(1)}$, $G^{(2)}$, $G^{(3)}$, and $G^{(4)}$ in the optical element region in accordance with claim 3. Figs. 5 and 6 show the plots of functions $h^{(1)}(x,y)$ and $h^{(2)}(x,y)$ in accordance with claim 1. Figs. 7 and 8 show the plots of functions $h^{(1)}(x,y)$ and $h^{(2)}(x,y)$ in accordance with claim 2. Figs. 9, 10, and 11 show the plots of functions $h^{(1)}(x,y)$, $h^{(2)}(x,y)$, and $h^{(3)}(x,y)$ in accordance with claim 3. Figs. 12, 13, 14, and 15 show the plots of functions $h^{(1)}(x,y)$, $h^{(2)}(x,y)$, $h^{(3)}(x,y)$ and $h^{(4)}(x,y)$ in accordance with claim 4. Fig. 16 shows the optical arrangement used for computing the kinoform in areas $G_{ij}$ in accordance with claims 1-4. Fig. 17 shows the image of the microrelief fragment of the multigrade kinoform located in one of the areas $G_{ij}$. Fig. 18 shows the scheme of observation of the visual image when the optical element is tilted up/down. Fig. 19 shows the scheme of observation of the visual image when the optical element is tilted left/right. Fig. 20(a) shows the visual images formed by the micro-optical system in accordance with claim 1 when the optical element is tilted up/down; Fig. 20(b) shows the visual images formed by the micro-optical system in accordance with claim 2 when the optical element is tilted up/down. Fig. 21(a) shows the visual images formed by the micro-optical system in accordance with claim 1 when the optical element is tilted left/right and $\alpha$ = 2; Fig. 21(b) shows the visual images formed by the micro-optical system in accordance with claim 2 when the optical element is tilted left/right and $\alpha$ = 2; Fig. 21(c) shows the visual images formed by the micro-optical system in accordance with claim 1 when the optical element is tilted left/right and $\alpha$ = 1.8; Fig. 21(d) shows the visual images formed by the micro-optical system in accordance with claim 1 when the optical element is tilted left/right and $\alpha$ = 2.2. Fig. 22(a) shows the visual images formed by the micro-optical system in accordance with claim 3 when the optical element is tilted up/down. Fig. 22(b) shows the visual images formed by the micro-optical system in accordance with claim 4 when the optical element is tilted up/down. Fig. 23(a) shows the visual images formed by the micro-optical system in accordance with claim 3 when the optical element is tilted left/right. Fig. 23(b) shows the visual images formed by the micro-optical system in accordance with claim 4 when the optical element is tilted left/right. Fig. 24 shows the scheme of the formation of elementary areas $G_{ij}$ in accordance with claim 5. Fig. 25 shows the scheme of observation in accordance with claim 5. Fig. 26 shows an example of an image formed by the micro-optical system in accordance with claim 5 at large angles of diffraction. Fig. 27 shows examples of symmetric images with kinematic effects of motion that can be synthesized using binary optical elements. Figs. 28 and 29 show examples of two designs of the micro-optical system with kinematic effects of motion made in accordance with claims 1 and 3. Fig. 30 shows the image of micro-optical systems whose designs are shown in Figs. 28 and 29 at angles of diffraction greater than 60°.

**Versions of the embodiment of the invention**

The claimed micro-optical system is a flat optical element. Optical element is flat if it transforms the wavefront on a microrelief whose depth is comparable to the wavelength of the incident radiation. Each flat optical element is characterized by its phase function. And vice versa, given the phase function one can compute the microrelief and make a flat optical element whose depth does not exceed the wavelength of light (Goncharsky A.V., Goncharsky A.A., "Computer Optics & Computer Holography", Moscow University Press, 2004, ISBN 5-211-04903-9).

Let the flat optical element be located in the z=0 plane. The wave field $u(x,y,0-0)$ before the optical element and the wave field $u(x,y,0+0)$ after reflection from the optical element are related as follows:

$$u(x,y,0+0) = u(x,y,0-0) \cdot T(x,y).$$

The complex function $T(x,y)$ is the transfer function of the optical element. It is known that $|T(x,y)| \leq 1$. If $|T(x,y)| < 1$, the element is called an amplitude element. If $|T(x,y)| = 1$, the element is called a phase element. All claimed micro-optical systems are flat optical phase elements.

The transfer function of a flat optical phase element has the form $T(x,y) = \exp(ik\Phi(x,y))$. The real function $\Phi(x,y)$ is called the phase function of the flat optical element.

The computation of the phase function $\Phi(x,y)$ of the optical element that forms the given image $\Phi(x,y)$ is a classical problem of flat optics. Scalar wave functions in the z = 0 and z = f planes are known to be related by the following formula:

$$u(x,y,f) = \frac{1}{\lambda f} \iint_G u(\xi,\eta,0-0) \exp(ik\Phi(\xi,\eta)) \exp\{ik \frac{(x-\xi)^2 + (y-\eta)^2}{2f}\} d\xi d\eta. \quad (1)$$

Here $(\xi, \eta)$ are the Cartesian coordinates of the optical element; $(x, y)$ are the Cartesian coordinates in the focal plane z=f; G is the region of the optical element; $\lambda$ is the wavelength of the incident radiation; f is the distance from the optical element to the focal plane, and $k = \frac{2\pi}{\lambda}$. A distinguishing feature of inverse problems is that in equation (1) only the absolute value $|u(x,y,f)| = F(x,y)$ of function $u(x,y,f)$ is known but not the function itself. Thus the inverse problem reduces to the determination of function $\Phi(x,y)$ from equation

$$\left| \frac{1}{\lambda f} \iint_G u(\xi,\eta,0-0) \exp(ik\Phi(\xi,\eta)) \exp\{ik \frac{(x-\xi)^2 + (y-\eta)^2}{2f}\} d\xi d\eta \right| = F(x,y). \quad (2)$$

Currently, efficient algorithms are known for computing the phase function $\Phi(x,y)$ of a flat optical element - a kinoform that forms the given image F(x,y) (Goncharsky A.V., Goncharsky A.A., "Computer Optics & Computer Holography", Moscow University Press, 2004, ISBN 5-211-04903-9). Kinoform as optical element and the method for computing a kinoform we first presented in (L.B.Lesem, P.M.Hirsch, J.A.Jr. Jordan, The kinoform: a new wavefront reconstruction device, IBM J. Res. Dev., 13 (1969), 105-155).

In the claimed invention the so-called multigrade kinoforms are used (Goncharsky A.V., Goncharsky A.A., "Computer Optics & Computer Holography", Moscow University Press, 2004, ISBN 5-211-04903-9). The microrelief of a multigrade kinoform is uniquely determined by its phase function $\Phi(x,y)$. For reflective optical elements in the case of normal incidence of light onto the optical element the depth of the microrelief at point (x,y) is equal to $0.5 \cdot \Phi(x,y)$. According to the invention formula, region G is subdivided into elementary areas $G_{ij}$, i =1, 2, ... I, j = 1, 2, ... J. For each elementary area $G_{ij}$ при equation (2) is solved for phase function $\Phi_{ij}(x,y)$ given function F(x,y).

Multigrade kinoforms form the image with energy efficiency of about 100%. Thus multigrade kinoform has the highest theoretical efficiency in the case of the formation of arbitrary images.

Fig. 1 shows the scheme of the partition of region G of the optical element into elementary areas $G_{ij}$, i =1, 2, ... I, j = 1, 2, ... J. The region G of the optical element is located in the z=0 plane of the Oxyz Cartesian coordinate system. One of the areas $G_{ij}$ in Fig. 1 is hatched. The size of elementary area $G_{ij}$ does not exceed 100 microns.

Fig. 2 shows the arrangement of two areas $G^{(1)}$ and $G^{(2)}$ in the optical element region G in accordance with claims 1 and 2. Area $G^{(1)}$ consists of white rectangles and it is the union of three elementary areas $G_{ij}$ where the sum (i+j) is even and area $G^{(2)}$ consists of black rectangles and has the form of the union of elementary areas $G_{ij}$ where the sum (i+j) is odd. The set of elementary areas designated by digit 1 in Fig. 2 makes up area $G^{(1)}$. The set of elementary areas designated by digit 2 in Fig.2 makes up area $G^{(2)}$. Area $G^{(1)}$ is responsible for the formation of symbol $A_1$. Area $G^{(2)}$ is responsible for the formation of symbol $A_2$.

Fig. 3 shows the arrangement of three nonintersecting areas $G^{(1)}$, $G^{(2)}$, and $G^{(3)}$ in the optical element region G in accordance with claim 3. Area $G^{(1)}$ consists of white rectangles designated by digit 1, area $G^{(2)}$ consists of vertically hatched rectangles designated by digit 2, and area $G^{(3)}$ consists of black rectangles designated by digit 3. Among the neighboring areas of each elementary area $G_{ij}$ there are always elementary areas from each of the three areas $G^{(1)}$, $G^{(2)}$, and $G^{(3)}$. Area $G^{(1)}$ is responsible for the formation of symbol $A_1$. Area $G^{(2)}$ is responsible for the formation of symbol $A_2$. Area $G^{(3)}$ is responsible for the formation of symbol $A_3$.

Fig. 4 shows the arrangement of four nonintersecting areas $G^{(1)}$, $G^{(2)}$, $G^{(3)}$, and $G^{(4)}$ in the optical element region G in accordance with claim 4. Area $G^{(1)}$ consists of white rectangles designated by digit 1, area $G^{(2)}$ consists of vertically hatched rectangles designated by digit 2, area $G^{(3)}$ consists of horizontally hatched rectangles designated by digit 3, and area $G^{(4)}$ consists of black rectangles designated by digit 4. Among the neighboring areas of each

elementary area $G_{ij}$ there are always elementary areas from each of the four areas $G^{(1)}$, $G^{(2)}$, $G^{(3)}$, and $G^{(4)}$. Area $G^{(1)}$ is responsible for the formation of symbol $A_1$. Area $G^{(2)}$ is responsible for the formation of symbol $A_2$. Area $G^{(3)}$ is responsible for the formation of symbol $A_3$. Area $G^{(4)}$ is responsible for the formation of symbol $A_4$.

Fig. 5 shows the plot of function $h^{(1)}(x,y) = C \cdot \rho^\alpha$ in the polar coordinate system $x = \rho \cdot \cos \varphi$, $y = \rho \cdot \sin \varphi$, where C is a given positive parameter, and $\alpha$ lies in the $1 < \alpha < 3$ interval. If $\alpha = 2$ this function has the shape of concave paraboloid of revolution. Functions $h^{(1)}_{ij}(x,y)$ are fragments of function $h^{(1)}(x,y)$ and the summand terms of the phase function of the flat optical element in elementary areas $G_{ij}$ in area $G^{(1)}$.

Fig. 6 shows the plot of function $h^{(2)}(x,y) = - C \cdot \rho^\alpha$ in the polar coordinate system $x = \rho \cdot \cos \varphi$, $y = \rho \cdot \sin \varphi$, where C is a given positive parameter, and $\alpha$ lies in the $1 < \alpha < 3$ interval. If $\alpha = 2$ this function has the shape of convex paraboloid of revolution. Functions $h^{(2)}_{ij}(x,y)$ are fragments of function $h^{(2)}(x,y)$ and the summand terms of the phase function of the flat optical element in elementary areas $G_{ij}$ in area $G^{(2)}$.

Fig. 7 shows the plot of function $h^{(1)}(x,y) = C \cdot \rho^\alpha \cos(2\varphi)$ in the polar coordinate system $x = \rho \cdot \cos \varphi$, $y = \rho \cdot \sin \varphi$, where C is a given positive parameter, and $\alpha$ lies in the $1 < \alpha < 3$ interval. If $\alpha = 2$ this function has the form of a saddle-shaped paraboloid. Functions $h^{(1)}_{ij}(x,y)$ are fragments of function $h^{(1)}(x,y)$ and the summand terms of the phase function of the flat optical element in elementary areas $G_{ij}$ in area $G^{(1)}$.

Fig. 8 shows the plot of function $h^{(2)}(x,y) = C \cdot \rho^\alpha \sin(2\varphi)$ in the polar coordinate system $x = \rho \cdot \cos \varphi$, $y = \rho \cdot \sin \varphi$, where C is a given positive parameter, and $\alpha$ lies in the $1 < \alpha < 3$ interval. If $\alpha = 2$ this function has the form of a saddle-shaped paraboloid. The plot of function $h^{(2)}(x,y)$ coincides with the plot of function $h^{(1)}(x,y)$ turned about the Oz axis. Functions $h^{(2)}_{ij}(x,y)$ are fragments of function $h^{(2)}(x,y)$ and the summand terms of the phase function of the flat optical element in elementary areas $G_{ij}$ in area $G^{(2)}$.

Figs. 9, 10, and 11 show the plots of functions $h^{(1)}(x,y) = C \cdot \rho^\alpha \cos(2\varphi)$, $h^{(2)}(x,y) = C \cdot \rho^\alpha \cos(2 \cdot (\varphi+\pi/3))$ и $h^{(3)}(x,y) = C \cdot \rho^\alpha \cos(2 \cdot (\varphi-\pi/3))$ in the polar coordinate system $x = \rho \cdot \cos \varphi$, $y = \rho \cdot \sin \varphi$, where C is a given positive parameter, and $\alpha$ lies in the $1 < \alpha < 3$ interval. If $\alpha = 2$ these functions have the form of saddle-shaped paraboloids. The plots of functions $h^{(2)}(x,y)$ and $h^{(3)}(x,y)$ differ from the plot of function $h^{(1)}(x,y)$ by the turn by angle $+ \pi/3$ and $- \pi/3$, respectively, about the Oz axis. Functions $h^{(1)}_{ij}(x,y)$ are fragments of function $h^{(1)}(x,y)$ and the summand terms of the phase function of the flat optical element in elementary areas $G_{ij}$ in area $G^{(1)}$. Functions $h^{(2)}_{ij}(x,y)$ are fragments of function $h^{(2)}(x,y)$ and the summand terms of the phase function of the flat optical element in elementary areas $G_{ij}$ in area $G^{(2)}$. Functions $h^{(3)}_{ij}(x,y)$ are fragments of function $h^{(3)}(x,y)$ and the summand terms of the phase function of the flat optical element in elementary areas $G_{ij}$ in area $G^{(3)}$.

Similarly, Figs. 12, 13, 14, and 15 show the plots of functions $h^{(1)}(x,y) = C \cdot \rho^\alpha \cos(2\varphi)$, $h^{(2)}(x,y) = C \cdot \rho^\alpha \cos(2 \cdot (\varphi+\pi/4))$, $h^{(3)}(x,y) = C \cdot \rho^\alpha \cos(2 \cdot (\varphi+\pi/2))$, and $h^{(4)}(x,y) = C \cdot \rho^\alpha \cos(2 \cdot (\varphi+3\pi/4))$ in the polar coordinate system $x = \rho \cdot \cos \varphi$, $y = \rho \cdot \sin \varphi$, where C is a given positive parameter, and $\alpha$ lies in the $1 < \alpha < 3$ interval. If $\alpha = 2$ these functions have the form of saddle-shaped paraboloids. The plots of functions $h^{(2)}(x,y)$, $h^{(3)}(x,y)$, and $h^{(4)}(x,y)$ differ from the plot of function $h^{(1)}(x,y)$ by the successive turns by angles $\pi/4$, $\pi/2$, and $3\pi/4$, respectively, about the Oz axis. Functions $h^{(1)}_{ij}(x,y)$ are fragments of function $h^{(1)}(x,y)$ and the summand terms of the phase function of the flat optical element in elementary areas $G_{ij}$ in area $G^{(1)}$. Functions $h^{(2)}_{ij}(x,y)$ are fragments of function $h^{(2)}(x,y)$ and the summand terms of the phase function of the flat optical element in elementary areas $G_{ij}$ in area $G^{(2)}$. Functions $h^{(3)}_{ij}(x,y)$ are fragments of function $h^{(3)}(x,y)$ and the summand terms of the phase function of the flat optical element in elementary areas $G_{ij}$ in area $G^{(3)}$. Functions $h^{(4)}_{ij}(x,y)$ are fragments of function $h^{(4)}(x,y)$ and the summand terms of the phase function of the flat optical element in elementary areas $G_{ij}$ in area $G^{(4)}$.

Fig. 16 shows the scheme of the formation of the image using a multigrade kinoform. Optical radiation 6 is incident on flat optical element 5 located in the $z = 0$ plane. The light scattered by the optical element forms image 7 of symbol $A_m$, $m = 1, 2, 3, 4$ in the focal plane $z = f$ parallel to the plane of optical element. Let us denote the function of the kinoform that is located in area $G_{ij}$ and forms symbol $A_m$ as $\Phi^{(m)}_{ij}(x,y)$. We compute the phase function $\Phi^{(m)}_{ij}(x,y)$ in elementary areas $G_{ij}$ using standard algorithms for the computation of the microstructure of a multigrade kinoform (Goncharsky A.V., Goncharsky A.A., "Computer Optics & Computer Holography", Moscow University Press, 2004, ISBN 5-211-04903-9), i.e., by solving equation (2) in area $G_{ij}$ with the right-hand side of equation given by the image of symbol $A_m$. Fig. 17 shows a fragment of the microrelief of the kinoform. The size of the microrelief fragment is $80 \times 80$ micron$^2$. The brightness of the image at each point $(x,y)$ in Fig. 17 is proportional to the depth of the microrelief at this point.

The phase function $\psi^{(m)}_{ij}(x.y)$ of the micro-optical system at points $(x,y)$ belonging to area $G_{ij}$ is equal to the sum of the phase function $\Phi^{(m)}_{ij}(x,y)$ and $h^{(m)}_{ij}(x,y)$. The phase functions $\Phi^{(m)}_{ij}(x,y)$ are defined in areas $G^{(m)}$ in accordance with the claims. For the cases of claims 1 and 2 the index m may take values 1 or 2. For the case of claim 3 index m may take values 1, 2 and 3. For the case of claim 4 the index m may take values 1, 2, 3, or 4. Functions $h^{(m)}_{ij}(x,y)$ are defined in the invention claims.

Figs. 18 and 19 show the schemes of observation of micro-optical systems in accordance with claims 1-4. Fig.

18 shows the scheme of observation when the optical element is tilted up/down. The source 8 and observer 9 are fixed and located in the Ozx plane. The source of light is located along the Oz axis. The torch of any mobile phone can be used as a source of light. When the optical element is tilted up/down the optical element turns by angle $\beta$ about the Oy axis.

Fig. 19 shows the scheme of observation when the optical element is tilted right/left. The source 8 and observer 9 are fixed and located in the Ozx plane. The source of light is located along the Oz axis. When the optical element is tilted right/left the optical element turns by angle $\gamma$ about the Ox axis.

Fig. 20 shows the kinematic effects of motion of image fragments for the micro-optical system in accordance with claims 1 and 2 for $\alpha = 2$ when the micro-optical system is tilted up/down. The angle $\gamma$ is equal to $\gamma=0$. The micro-optical system in accordance with claims 1 and 2 forms two symbols A1 and A2. The letters "A" and "B" are chosen as symbols A1 and A2, respectively. The central frames in Figs. 20(a) and 20(b) correspond to the tilt angle $\gamma=0$. Fig. 20(a) shows the kinematic effects of motion of image fragments for the micro-optical system in accordance with claim 1. When the optical element is tilted up/down the letters «A» and «B» move in opposite directions from the center of the optical element along the vertical axis. Fig. 20(b) the kinematic effects of motion of image fragments for the micro-optical system in accordance with claim 2. When the optical element is tilted up/down the letters «A» and «B» move in opposite directions from the center of the optical element along the horizontal axis.

Fig. 21 shows the images formed by the micro-optical system in accordance with claims 1 and 2 when the optical system is tilted left/right. The images were obtained for different angles $\gamma$ at fixed angle $\beta$. The central frames in Figs. 21(a), 21(b), 21(c), and 21(d) correspond to the tilt angle $\gamma=0$. Fig. 21(a) shows the images formed by the micro-optical system in accordance with claim 1 for $\alpha = 2$ when the optical system is tilted left/right. Fig. 21(b) shows the images formed by the micro-optical system in accordance with claim 2 for $\alpha = 2$ when the optical system is tilted left/right. As is evident from Fig. 21(a), when the optical element is tilted left/right the letters «A» and «B» move in opposite directions from the center of the optical element along the horizontal axis. As is evident from Fig. 21(b), when the optical element is tilted left/right the letters «A» and «B» move in opposite directions from the center of the optical element along the vertical axis.

Thus for micro-optical systems as described in claims 1 and 2 and forming the images of two symbols "A" and "B" the letters "A" and "B" move in opposite directions from the center of the optical element when the optical system is tilted left/right. The difference between the character of motion between the micro-optical systems as described in claims 1 and 2 is that the directions of motion of letters in accordance with claims 1 and 2 are perpendicular to each other. If $\alpha = 2$ then the sizes of the letters system do not change.

Figs. 21(c) and 21(d) show the images formed by the micro-optical system made in accordance with claim 1 when the system is tilted left/right for the cases of $\alpha =2.2$ and 1.8, respectively. As is evident from Figs. 21(c) and 21(d), the behavior of the motion of letters when the optical element is tilted remains exactly the same as in the case $\alpha = 2$ as shown in Figs. 21(a), 21(b), however, the sizes of books change. For $\alpha > 2$ the sizes of books increase toward the center and decrease toward the edges of the optical element.

Fig. 22 shows images formed by the micro-optical system in accordance with claims 3 and 4 when the optical system is tilted up/down. Angle $\gamma$ is fixed at 0. The micro-optical system in accordance with claim 3 forms the image consisting of three symbols $A_1$, $A_2$ и $A_3$. The letters «A», «B», and «C» are chosen as symbols $A_1$, $A_2$ and $A_3$, respectively. The micro-optical system in accordance with claim 4 forms the image consisting of four symbols $A_1$, $A_2$, $A_3$, and $A_4$, respectively. The letters «A», «B», «C», and «D» are chosen as symbols $A_1$, $A_2$, $A_3$, and $A_4$, respectively. Fig. 22(a) shows images formed by the micro-optical system in accordance with claim 3 when the optical system is tilted up/down. As is evident from Fig. 22(a), if the micro-optical system is tilted up/down the letters «A», «B», and «C» scatter away from the center along rays that make angles equal to 120° between each other. Fig. 22(b) shows images formed by the micro-optical system in accordance with claim 4 when the optical system is tilted up/down. As is evident from Fig. 22(b), if the micro-optical system is tilted up/down the letters «A», «B», «C», and «D» scatter away from the center along rays that make angles equal to 90° between each other. The central frames in Figs. 22(a) and 22(b) correspond to the slope angle $\beta=0$.

Fig. 23 shows images formed by the micro-optical system in accordance with claims 3 and 4 when the optical system is tilted left/right. Angle $\gamma$ varies and angle $\beta$ is fixed. Fig. 23(a) shows images formed by the micro-optical system in accordance with claim 3 when the optical system is tilted right/left. As is evident from Fig. 23(a), if the micro-optical system is tilted left/right the letters «A», «B», and «C» turn clockwise/counterclockwise about the center. Fig. 23(b) shows images formed by the micro-optical system in accordance with claim 4 when the optical system is tilted left/right. As is evident from Fig. 23(b), if the micro-optical system is tilted left/right the letters «A», «B», «C», and «D» turn clockwise/counterclockwise about the center. The central frames correspond to the slope angle $\beta=0$.

All illustrations in Figs. 20-23, except Fig 21(c) and Fig. 21(d), correspond to $\alpha = 2$. In this case for the micro-optical system in accordance with claim 1 functions $h^{(1)}(x,y)$ and $h^{(2)}(x,y)$ are equal to $h^{(1)}(x,y)=C\cdot(x^2+y^2)$ (C>0) and $h^{(2)}(x,y)=-C\cdot(x^2+y^2)$, respectively. For the micro-optical system in accordance with claim 2 functions $h^{(1)}(x,y)$ and $h^{(2)}(x,y)$ are equal to $h^{(1)}(x,y)=C\cdot(x^2-y^2)$ (C>0) and $h^{(2)}(x,y)=-C\cdot(x^2-y^2)$, respectively. The shapes of surfaces $h^{(m)}(x,y)$ for the micro-optical system in accordance with claims 3,4 are shown in Fig. 9-15.

Thus micro-optical systems in accordance with claims 3 and 4 form images consisting of three or four letters, respectively. When the optical system is tilted up/down the letters of the image scatter away from the image center along rays, which make an angle of 120° and 90° in the case of micro-optical system made in accordance with claims 3 and 4, respectively. When the optical system is tilted left/right the image turns clockwise/counterclockwise. The observed kinematic effects of motion produced by micro-optical systems in accordance with claims 3 and 4 differ both in the number of symbols formed and in the angle between the rays along which the symbols move away when the optical element is tilted.

Fig. 24 shows the scheme of the formation of elementary areas $G_{ij}$ in accordance with claim 5. Each elementary area $G_{ij}$ contains area $G'_{ij}$ with the size no greater than 40 microns. Area $G'_{ij}$ in Fig. 24 is designated by digit 7. The sizes of areas $G_{ij}$ and $G'_{ij}$ is specially chosen so that the resolution of human eye would be insufficient to see elementary areas. Diffraction gratings of different orientation and with periods shorter than 0.8 microns can be arranged so as to synthesize another color image that is seen by the observer over the entire area of the optical element at large angles of diffraction (greater than 60°).

Fig. 25 shows the scheme of observation of the micro-optical system in accordance with claim 5 at large angles of diffraction. At angles of diffraction smaller than 60° the observer sees the image of symbols produced by kinoforms.

Claims 1-4 define the phase function of the micro-optical system. In each elementary area $G_{ij}$ in area $G^{(m)}$ the phase function $\Psi_{ij}^{(m)}(x,y)$ of the micro-optical system is equal to the sum of the given function $h_{ij}^{(m)}(x,y)$ and the phase function $\Phi_{ij}^{(m)}(x,y)$ of the multigrade kinoform that forms the image of a certain symbol in the focal plane z=const. The phase function $\Psi_{ij}^{(m)}(x,y)$, i=1...I, j=1...J, m=1...M, uniquely defines the microrelief of the flat optical phase element. M =2 in the micro-optical system made in accordance with claims 1,2. M =3 in the micro-optical system made in accordance with claim 3. M =4 in the micro-optical system made in accordance with claim 4 .

One should distinguish multigrade and binary flat optical; elements. In reflective flat multigrade optical elements the depth of the microrelief h(x,y) is $0.5 \cdot \Psi(x,y)$ in the case of normally incidence of light onto the element. (Goncharsky A.V., Goncharsky A.A., "Computer Optics & Computer Holography", Moscow University Press, 2004, ISBN 5-211-04903-9). The theoretical energy efficiency of multigrade flat optical element is close to 100%.

Unlike multigrade elements the micrrelief of binary flat optical phase elements takes only two values - 0 and h. The microrelief depth is equal to h for the points (x,y) that satisfy condition $0 < k\Psi(x,y) < \pi$. Here k is the wavenumber and h is the given parameter, which is smaller than 0.6 micron. The energy efficiency of binary elements does not exceed 50%. Another important feature of binary elements is that a binary flat optical element always forms a symmetric image (Goncharsky A.V., Goncharsky A.A., "Computer Optics & Computer Holography", Moscow University Press, 2004, ISBN 5-211-04903-9). This means that all the images shown in Figs. 20-23 are in principle impossible to synthesize using binary optical elements. Fig. 27 shows examples of symmetric images with kinematic effects of motion, which can be synthesized using binary optical elements. Note in conclusion that the technology of the synthesis of binary flat optical elements is much simpler than the technology of the synthesis of multigrade elements. The latter circumstance is an important factor in optical security technologies, and this is why all micro-optical systems in accordance with claims 1-4 are formed using multigrade flat optical elements.

The technology of the synthesis of flat multigrade optical elements is best protected against counterfeit. The microrelief of such optical elements mush be made with an accuracy of about 20 nm (Goncharsky A.A. «Ob odnoi zadache sinteza nanoopticheskikh elementov» ("On the problem of synthesis of nano-optical elements"), "Vychislitel'nye metody I programmirovanie: Novye vychislitel'nye tekhnologii", ("Numerical Methods and Programming: New Computing Technologies"), 2008, V. 9, p. 405-408, in Russian). The claimed micro-optical systems can be produced using the technology of electron-beam lithography, which allows shaping the microrelief with the said accuracy. Electron-beam technology is not widespread, only a few companies worldwide are capable of using it. All this makes it possible to narrow down the range of technologies that can be used to make the claimed micro-optical systems, thereby ensuring their bona fide protection against counterfeit (Goncharsky A.V., Goncharsky A.A., "Computer Optics & Computer Holography", Moscow University Press, 2004, ISBN 5-211-04903-9).

The technology of mass replication of the claimed micro-optical systems is easily available and ensures low price of micro-optical systems if replicated on a mass scale (Optical Document Security, Third Edition, Rudolf L. Van Renesse. Artech House, Boston, London, 2005).

Micro-optical systems made in accordance with claims 1-6 can occupy either the entire area of the optical element or a separate area as shown in Figs. 28 and 29, which illustrate the example of a specific implementation of the invention described below. The region occupied by micro-optical systems is denoted by letter G. The symbol image in Fig. 28 corresponds to claim 1. The symbol image in Fig. 29 corresponds to claim 3. If the micro-optical system is made in accordance with claim 5 then at large angles of diffraction (greater than 60°) the image inside region G changes as shown in Fig.30.

Thus the main differences between the claimed micro-optical systems from the prototype are:

1. Unlike the prototype the claimed micro-optical system is a single-layer phase optical element with the relief depth no greater than 0.6 micron. The claimed micro-optical system is thin and single-layered and these features expand the potential of its use as optical security threads in bank notes.

2. The claimed micro-optical system allows forming two security features. In each of the claims 1-4 the claimed micro-optical systems synthesize for the observer an image consisting of different symbols at any position of the optical element. All the synthesized images are asymmetric with respect to the zero order. The asymmetry of the synthesized images at any tilt angle of the optical element is a solid security feature, which is easy to control visually. Any counterfeit attempts using optical technologies for recording originals of security features may produce only images that are symmetric with respect to the zero order. None of the images shown in Figs. 20-23 is symmetric with respect to the zero order. This is the first, very important level of protection.

3. The second security feature is kinematic effects of the motion of symbols when the micro-optical system is tilted. Kinematic effects of motion, which are described in detail in the disclosure, are easy to control visually.

4. The use of electron-beam technology, which is knowledge-intensive and not widespread, securely protects the claimed micro-optical systems against counterfeit.

5. The claimed micro-optical system may work both in reflection and transmission modes.

6. The claimed micro-optical systems can be made in large numbers using standard equipment for manufacturing holographic security elements, thereby reducing the production costs.

**Industrial applicability**

The examples of specific implementations of the invention presented below confirm the possibility of the use of invention without limiting its volume.

*Examples.*

As examples of the micro-optical system with kinematic effects of motion we produced two holograms whose designs are shown in Figs. 28 and 29.

Example 1

In region G, which has the form of a circle of diameter 12.8 mm shown in Fig. 28, hosts a diffractive optical element - a micro-optical system that forms the image of two symbols. When the system is illuminated by a point source the observer sees two letters «A» and «B». The diffractive optical element in region G corresponds to claims 1 and 5. Parameter $\alpha$ = 2. For the synthesis of the micro-optical system region G was subdivided into elementary areas $G_{ij}$ with sizes no greater than 100 microns. The total number of elementary areas $G_{ij}$ in the region was greater than 35 000. Two areas $G^{(1)}$ and $G^{(2)}$ were made of elementary areas $G_{ij}$ in accordance with Fig. 2. In areas $G^{(1)}$ and $G^{(2)}$ multigrade kinoforms with phase functions $\Phi^{(m)}_{ij}$, m = 1, 2 were computed that formed the images of symbols «A» and «B». The phase function of the micro-optical system in elementary areas $G_{ij}$ of areas $G^{(m)}$, m = 1, 2, is equal to the sum of functions $\Phi^{(m)}_{ij}$ and $h^{(m)}_{ij}(x,y)$ in accordance with claim 1. The micro-optical system made in each elementary area $G_{ij}$ contains selected elementary area $G'_{ij}$ denoted by digit 7 in Fig. 24. The sizes of areas $G'_{ij}$ do not exceed 30 microns.

At diffraction angles smaller than 60° when the optical element is tilted up/down the observer sees the image of letters «A» and «B», which move along two rays at the angle of 180° apart. Fig. 20(a) shows the pattern of the motion of symbols. Fig. 21(a) shows the pattern of the motion of symbols when the optical element is tilted left/right. At larger angles of diffraction the image of letters «A» and «B» disappears and the observer sees in region G a different color image, which is shown in Fig. 30.

Example 2

In region G, which has the form of a circle of diameter 12.8 mm shown in Fig. 28, hosts a diffractive optical element - a micro-optical system that forms the image of three symbols. When the system is illuminated by a point source the observer sees three letters «A», «B», and «C». The diffractive optical element in region G corresponds to claims 3 and 5. Parameter $\alpha = 2$. For the synthesis of the micro-optical system region G was subdivided into elementary areas $G_{ij}$ with sizes no greater than 100 microns. The total number of elementary areas $G_{ij}$ in the region was greater than 35 000. Three areas $G^{(1)}$, $G^{(2)}$, and $G^{(3)}$ were made of elementary areas $G_{ij}$ in accordance with Fig. 3. In areas $G^{(1)}$, $G^{(2)}$, and $G^{(3)}$ multigrade kinoforms with phase functions $\Phi^{(m)}_{ij}$, m = 1, 2, 3 were computed that formed the images of symbols «A», «B», and «C». The phase function of the micro-optical system in elementary areas $G_{ij}$ of areas $G^{(m)}$, m = 1, 2, 3 is equal to the sum of functions $\Phi^{(m)}_{ij}$ and $h^{(m)}_{ij}(x,y)$ in accordance with claim 3. The micro-optical system made in each elementary area $G_{ij}$ contains selected elementary area $G'_{ij}$ denoted by digit 7 in Fig. 24. The sizes of areas $G'_{ij}$ do not exceed 30 microns.

At diffraction angles smaller than 60° when the optical element is tilted up/down the observer sees the image of letters «A», «B», and «C», which move along three rays at the angles of 120° apart. Fig. 22(a) shows the pattern of the motion of symbols. Fig. 23(a) shows the pattern of the motion of symbols when the optical element is tilted left/right. At larger angles of diffraction the image of letters «A» and «B» disappears and the observer sees in region G a different color image, which is shown in Fig. 30.

The microrelief of each flat optical element was recorded on a plate with electron-beam resist using the technology of electron-beam lithography with Carl Zeiss ZBA-21 electron lithograph. Master matrices of micro-optical systems were made using electrotyping technique. Standard holographic replication procedure was used to produce replicated master matrices, which were then used as originals to produce working matrices for rolling. Standard rolling equipment was then used to produce hot-stamped metalized foil, which, in turn, was used to produce security labels containing the flat optical phase elements described above. The thickness of the security layer of micro-optical systems forming the image on protected documents was 3-5 microns, which is substantially smaller than in the case of "Motion" technology. The samples made demonstrated high efficiency of the proposed technical solutions.

## Claims

1. Micro-optical system for the formation of visual images with kinematic effects of motion whereby the micro-optical system is a single-layer phase flat optical element residing on a base and located in a region (G) of the z=0 plane of the Cartesian coordinate system Oxyz, which region is subdivided into elementary areas $G_{ij}$, i =1, 2, ... I, j = 1, 2, ... J, whereby when the micro-optical system is illuminated by a point source the observer sees simultaneously the symbols $A_1$ and $A_2$, and when the optical element is inclined symbols $A_1$ and $A_2$ move in opposite directions over the entire area of the optical element, **characterised in that** each of the elementary areas have a size no greater than 100 microns, whereby in the elementary areas $G_{ij}$ with even sum (i+j) the phase function of the optical element is equal to the sum of the phase function $\Phi^{(1)}_{ij}(x,y)$ of the multigrade kinoform that forms the image of symbol $A_1$ in the focal plane z=const, and the given function $h^{(1)}_{ij}(x,y) = C \cdot \rho^{\alpha}$ in the polar coordinate system $x = \rho \cdot \cos \varphi$, $y = \rho \cdot \sin \varphi$, where C is a given positive parameter and $\alpha$, a given parameter in the $1 < \alpha < 3$ interval, whereby in the areas $G_{ij}$ with odd sum (i+j) the phase function of the optical element is equal to the sum of the given function $h^{(2)}_{ij}(x,y) = - C \cdot \rho^{\alpha}$ and the phase function $\Phi^{(2)}_{ij}(x,y)$ of the multigrade kinoform that forms the image of symbol $A_2$ in the focal plane z=const.

2. Micro-optical system for the formation of visual images with kinematic effects of motion whereby the micro-optical system is a single-layered phase flat optical element residing on a base and located in a region (G) of the z=0 plane of the Cartesian coordinate system Oxyz, which region is subdivided into elementary areas $G_{ij}$, i =1, 2, ... I, j = 1, 2, ... J, whereby when the micro-optical system is illuminated by a point source the observer sees simultaneously the symbols A1 and A2, and when the optical element is inclined symbols A1 and A2 move in opposite directions over the entire area of the optical element, **characterised in that** each of the elementary areas have a size no greater than 100 microns, whereby in the elementary areas $G_{ij}$ with even sum (i+j) the phase function of the optical element is equal to the sum of the phase function $\Phi^{(1)}_{ij}(x,y)$ of the multigrade kinoform that forms the image of symbol $A_1$ in the focal plane z=const, and the given function $h^{(1)}_{ij}(x,y) = C \cdot \rho^{\alpha} \cos(2\varphi)$ in the polar coordinate system $x = \rho \cdot \cos \varphi$, $y = \rho \cdot \sin \varphi$, where C is a given positive parameter and $\alpha$, a given parameter in the $1 < \alpha < 3$ interval, whereby in the areas $G_{ij}$ with odd sum (i+j) the phase function of the optical element is equal to the sum of the given function $h^{(2)}_{ij}(x,y) = C \cdot \rho^{\alpha} \sin(2\varphi)$ and the phase function $\Phi^{(2)}_{ij}(x,y)$ of the multigrade kinoform that forms the image

of symbol $A_2$ in the focal plane z=const.

3. Micro-optical system for the formation of visual images with kinematic effects of motion whereby the micro-optical system is a single-layered phase flat optical element residing on a base and located in a region (G) of the z=0 plane of the Cartesian coordinate system Oxyz, which is subdivided into elementary areas $G_{ij}$, i =1, 2, ... I, j = 1, 2, ... J, **characterised in that** each of the elementary areas have a size no greater than 100 microns, which form three non-intersecting areas $G^{(1)}$, $G^{(2)}$ , and $G^{(3)}$ so that among the neighboring areas for each elementary area $G_{ij}$ there are always elementary areas belonging to each of the three areas $G^{(1)}$, $G^{(2)}$ and $G^{(3)}$, whereby in the elementary areas $G_{ij}$ of area $G^{(1)}$ the phase function of the optical element is equal to the sum of the phase function $\Phi^{(1)}_{ij}(x,y)$ of the multigrade kinoform that forms the image of symbol $A_1$ in the focal plane z=const, and the given function $h^{(1)}_{ij}(x,y) = C \cdot \rho^\alpha \cos(2\varphi)$ in the polar coordinate system $x = \rho \cdot \cos \varphi$, $y = \rho \cdot \sin \varphi$, where C is a given positive parameter and $\alpha$, a given parameter in the $1 < \alpha < 3$ interval, whereby in the elementary areas $G_{ij}$ of area $G^{(2)}$ the phase function of the optical element is equal to the sum of the given function $h^{(2)}_{ij}(x,y) = C \cdot \rho^\alpha \cos(2 \cdot (\phi+\pi/3))$ and the phase function $\Phi^{(2)}_{ij}(x,y)$ of the multigrade kinoform that forms the image of symbol $A_2$ in the focal plane z=const, whereby in elementary areas $G_{ij}$ of area $G^{(3)}$ the phase function of the optical element is equal to the sum of the given function $h^{(3)}_{ij}(x,y) = C \cdot \rho^\alpha \cos(2 \cdot (\varphi-\pi/3))$ and the phase function $\Phi^{(3)}_{ij}(x,y)$ of the multigrade kinoform that forms the image of symbol $A_3$ in the focal plane z=const, whereby when the micro-optical system is illuminated by a point source the observer sees simultaneously the symbols $A_1$, $A_2$, and $A_3$, and when the optical element is inclined symbols $A_1$, $A_2$, and $A_3$ move over the entire area of the optical element along three rays such that the angles between them are equal to $2\pi/3$.

4. Micro-optical system for the formation of visual images with kinematic effects of motion whereby the micro-optical system is a single-layer phase flat optical element residing on a base and located in a region (G) of the z=0 plane of the Cartesian coordinate system Oxyz, which is subdivided into elementary areas $G_{ij}$, i =1, 2, ... I, j = 1, 2, ... J, **characterised in that** each of the elementary areas have a size no greater than 100 microns, which form four nonintersecting regions $G^{(1)}$, $G^{(2)}$, $G^{(3)}$ , and $G^{(4)}$ so that among the neighboring areas for each elementary area $G_{ij}$ there are always elementary areas belonging to each of the four areas $G^{(1)}$, $G^{(2)}$, $G^{(3)}$, and $G^{(4)}$, whereby in the elementary areas $G_{ij}$ of area $G^{(1)}$ the phase function of the optical element is equal to the sum of the phase function $\Phi^{(1)}_{ij}(x,y)$ of the multigrade kinoform that forms the image of symbol $A_1$ in the focal plane z=const, and the given function $h^{(1)}_{ij}(x,y) = C \cdot \rho^\alpha \cos(2\varphi)$ in the polar coordinate system $x = \rho \cdot \cos \varphi$, $y = \rho \cdot \sin \varphi$, where C is a given positive parameter and $\alpha$, a given parameter in the $1 < \alpha < 3$ interval, whereby in the elementary areas $G_{ij}$ of area $G^{(2)}$ the phase function of the optical element is equal to the sum of the phase function $\Phi^{(2)}_{ij}(x,y)$ of the multigrade kinoform that forms the image of symbol $A_2$ in the focal plane z=const, and the given function $h^{(2)}_{ij}(x,y) = C \cdot \rho^\alpha \cos(2(\varphi+\pi/4))$ in the polar coordinate system $x = \rho \cdot \cos \varphi$, $y = \rho \cdot \sin \varphi$, where C is a given positive parameter and $\alpha$, a given parameter in the $1 < \alpha < 3$ interval, whereby in the elementary areas $G_{ij}$ of area $G^{(3)}$ the phase function of the optical element is equal to the sum of the phase function $\Phi^{(3)}_{ij}(x,y)$ of the multigrade kinoform that forms the image of symbol $A_3$ in the focal plane z=const, and the given function $h^{(3)}_{ij}(x,y) = C \cdot \rho^\alpha \cos(2(\varphi+\pi/2))$ in the polar coordinate system $x = \rho \cdot \cos \varphi$, $y = \rho \cdot \sin \varphi$, where C is a given positive parameter and $\alpha$, a given parameter in the $1 < \alpha < 3$ interval, whereby in the elementary areas $G_{ij}$ of area $G^{(4)}$ the phase function of the optical element is equal to the sum of the phase function $\Phi^{(4)}_{ij}(x,y)$ of the multigrade kinoform that forms the image of symbol $A_4$ in the focal plane z=const, and the given function $h^{(4)}_{ij}(x,y) = C \cdot \rho^\alpha \cos(2(\varphi+3\pi/4))$ in the polar coordinate system $x = \rho \cdot \cos \varphi$, $y = \rho \cdot \sin \varphi$, where C is a given positive parameter and $\alpha$, a given parameter in the $1 < \alpha < 3$ interval, whereby when the micro-optical system is illuminated by a point source the observer sees simultaneously the symbols $A_1$, $A_2$, $A_3$, and $A_4$, when the optical element is inclined symbols $A_1$, $A_2$, $A_3$, and $A_4$, move over the entire area of the optical element along four rays such that the angles between them are equal to $\pi/2$.

5. The micro-optical system of one of claims 1-4, where in each elementary area $G_{ij}$ there is a distinguished area $G'_{ij}$ with the size no greater than 40 microns into which diffraction gratings with different orientations and periods smaller than 0.8 micron are recorded so that at diffraction angles greater than 60° the observer sees another color image on the entire area of the optical element.

6. The micro-optical system of one of claims 1-5 for the formation of visual images with kinematic effects of motion with the possibility of partial reflection and partial transmission of light.

**Patentansprüche**

1. Mikrooptisches System zur Erstellung visueller Bilder mit Bewegungseffekten, **dadurch gekennzeichnet,**

**dass** es als Einzelschicht-Phasen-Optikelement ausgebildet ist,
das auf einer Basis, in einer Region G und in einer Ebene z=0 eines Kartesischen Koordinatensystems Oxyzs angeordnet ist, das in Elementarbereiche $G_{ij}$ mit i = 1, 2,... und j = 1, 2,...J eingeteilt ist, von denen jeder eine Größe von nicht größer als 100 Mikron aufweist,

**dass** in den Elementarbereichen $G_{ij}$ mit einer geraden Summe (i+j) die Phasenfunktion des Optikelements gleich der Summe der Phasenfunktion $\Phi^{(1)}_{ij}(x,y)$ des Vielfachbreitbildformats ist, das das Bild des Symbols $A_1$ in der Brennweitenebene z=const bildet,

**dass** die gegebene Funktion $h^{(1)}_{ij}(x,y) = C \cdot p^\alpha$ im Polarkoordinatensystem x = p $\cdot$ cos $\varphi$, y = p $\cdot$ sin $\varphi$, wobei C ein gegebener positiver Parameter und $\alpha$ ein gegebener Parameter im Intervall 1 < $\alpha$ < 3 ist,

**dass** in den Elementarbereichen $G_{ij}$ mit einer ungeraden Summe (i+j) die Phasenfunktion des Optikelements gleich der Summe der gegebenen Funktion $h^{(2)}_{ij}(x,y) = -C \cdot p^\alpha$ und die Phasenfunktion $\Phi^{(2)}_{ij}(x,y)$ des Vielfachbreitbildformats ist, das das Bild des Symbols $A_2$ in der Brennweitenebene z=const bildet,

**dass** bei der Illumination des Optiksystems durch eine Punktquelle ein Beobachter gleichzeitig die Symbole $A_1$ und $A_2$ erkennt und dass sich bei der Neigung des Optikelements die Symbole $A_1$ und $A_2$ in entgegengesetzen Richtungen über die ganze Fläche des Optikelements bewegen.

2. Mikrooptisches System nach Anspruch 1,
**dadurch gekennzeichnet,**
**dass** es als Einzelschicht-Phasen-Optikelement ausgebildet ist, das auf einer Basis, in einer Region G und in einer Ebene z=0 eines Kartesischen Koordinatensystems Oxyzs angeordnet ist, das in Elementarbereiche $G_{ij}$ mit i = 1, 2,... und j = 1, 2,...J eingeteilt ist, von denen jeder eine Größe von nicht größer als 100 Mikron aufweist,

**dass** in den Elementarbereichen $G_{ij}$ mit einer geraden Summe (i+j) die Phasenfunktion des Optikelements gleich der Summe der Phasenfunktion $\Phi^{(1)}_{ij}(x,y)$ des Vielfachbreitbildformats ist, das das Bild des Symbols $A_1$ in der Brennweitenebene z=const bildet,

**dass** die gegebene Funktion $h^{(1)}_{ij}(x,y) = C \cdot p^\alpha \cos(2\varphi)$ im Polarkoordinatensystem x = p $\cdot$ cos $\varphi$, y = p $\cdot$ sin $\varphi$, wobei C ein gegebener positiver Parameter und $\alpha$ ein gegebener Parameter im Intervall 1 < $\alpha$ < 3 ist,

**dass** in den Elementarbereichen $G_{ij}$ mit einer ungeraden Summe (i+j) die Phasenfunktion des Optikelements gleich der Summe der gegebenen Funktion $h^{(2)}_{ij}(x,y) = C \cdot p^\alpha \sin(2\varphi)$ und die Phasenfunktion $\Phi^{(2)}_{ij}(x,y)$ des Vielfachbreitbildformats ist, das das Bild des Symbols $A_2$ in der Brennweitenebene z=const bildet,

und **dass** bei der Illuminationdes mikrooptischen Systems durch eine Punktquelle ein Beobachter gleichzeitig die Symbole $A_1$ und $A_2$ erkennt, während bei der Neigung des Optikelements sich die Smbole $A_1$ und $A_2$ in entgegengesetzten Richtungen über die ganze Fläche des Optikelements bewegen.

3. Mikrooptisches System nach Anspruch 1 oder 2,
**dadurch gekennzeichnet,**
**dass** es als Einzelschicht-Phasen-Optikelement ausgebildet ist, das auf einer Basis, in einer Region G und in einer Ebene z=0 eines Kartesischen Koordinatensystems Oxyzs angeordnet ist, das in Elementarbereiche $G_{ij}$ mit i = 1, 2,... und j = 1, 2,...J eingeteilt ist, von denen jeder eine Größe von nicht größer als 100 Mikron aufweist und die drei sich nicht schneidende Bereiche $G^{(1)}$, $G^{(2)}$ und $G^{(3)}$ bilden, so dass es unter den benachbarten Bereichen für jeden Elementarbereich $G_{ij}$ immer Elementarbereiche gibt, die zu jedem der drei Bereiche $G^{(1)}$, $G^{(2)}$ und $G^{(3)}$ gehören,

**dass** in den Elementarbereichen $G_{ij}$ des Bereichs $G^{(1)}$ die Phasenfunktion des Optikelements gleich der Summe der Phasenfunktion $\Phi^{(1)}_{ij}(x,y)$ des Vielfachbreitbildformats ist, das das Bild des Symbols $A_1$ in der Brennweitenebene z=const bildet,

**dass** die gegebene Funktion $h^{(1)}_{ij}(x,y) = C \cdot p^\alpha \cos(2\varphi)$ im Polarkoordinatensystem x = p $\cdot$ cos $\varphi$, y = p $\cdot$ sin $\varphi$, wobei C ein gegebener positiver Parameter und $\alpha$ ein gegebener Parameter im Intervall 1 < $\alpha$ < 3 ist,

**dass** in den Elementarbereichen $G_{ij}$ des Bereichs $G^{(2)}$ die Phasenfunktion des Optikelements gleich der Summe der gegebenen Funktion $h^{(2)}_{ij}(x,y) = C \cdot p^\alpha \cos(2 \cdot (\varphi+\pi/3))$ und die Phasenfunktion $\Phi^{(2)}_{ij}(x,y)$ des Vielfachbreitbildformats ist, das das Bild des Symbols $A_2$ in der Brennweitenebene z=const bildet, dass in den Elementarbereichen $G_{ij}$ des Bereichs $G^{(3)}$ die Phasenfunktion des Optikelements gleich der Summe der gegebenen Funktion $h^{(3)}_{ij}(x,y) = C \cdot p^\alpha \cos(2 \cdot (\varphi-\pi/3))$ und die Phasenfunktion $\Phi^{(3)}_{ij}(x,y)$ des Vielfachbreitbildformats ist, das das Bild des Symbols $A_3$ in der Brennweitenebene z=const bildet, und dass bei der Illumination des mikrooptischen Systems durch eine Punktquelle ein Beobachter gleichzeitig die Symbole $A_1$ und $A_2$ erkennt, während bei der Neigung des Optikelements sich die Smbole $A_1$ und $A_2$ in entgegengesetzten Richtungen über die ganze Fläche des Optikelements bewegen.

4. Mikrooptisches System nach einem der Ansprüche 1 bis 3,
**dadurch gekennzeichnet,**
**dass** es als Einzelschicht-Phasen-Optikelement ausgebildet ist, das auf einer Basis, in einer Region G und in einer Ebene z=0 eines Kartesischen Koordinatensystems Oxyzs angeordnet ist, das in Elementarbereiche $G_{ij}$ mit i = 1, 2,... und j = 1, 2,...J eingeteilt ist, von denen jeder eine Größe von nicht größer als 100 Mikron aufweist und die vier sich nicht schneidende Bereiche $G^{(1)}$, $G^{(2)}$, $G^{(3)}$ und $G^{(4)}$ bilden, so dass es unter den benachbarten Bereichen für jeden Elementarbereich $G_{ij}$ immer Elementarbereiche gibt, die zu jedem der vier Bereiche $G^{(1)}$, $G^{(2)}$, $G^{(3)}$ und $G^{(4)}$ gehören,

**dass** in den Elementarbereichen $G_{ij}$ des Bereichs $G^{(1)}$ die Phasenfunktion des Optikelements gleich der Summe der Phasenfunktion $\Phi^{(1)}_{ij}(x,y)$ des Vielfachbreitbildformats ist, das das Bild des Symbols $A_1$ in der Brennweitenebene z=const bildet,

**dass** die gegebene Funktion $h^{(1)}_{ij}(x,y) = C \cdot p^\alpha \cos(2\varphi)$ im Polarkoordinatensystem x = p • cos φ, y = p • sin φ, wobei C ein gegebener positiver Parameter und α ein gegebener Parameter im Intervall 1 < α < 3 ist,

**dass** in den Elementarbereichen $G_{ij}$ des Bereichs $G^{(3)}$ die Phasenfunktion des Optikelements gleich der Summe der gegebenen Funktion $\Phi^{(3)}_{ij}(x,y)$ des Vielfachbreitformats ist, das das Bild des Symbols $A_3$ in der Brennweitenebene z=const bildet,

und **dass** die gegebene Funktion $h^{(3)}_{ij}(x,y) = C \cdot p^\alpha \cos(2 \cdot (\phi+\pi/2))$ im Polarkoordinatensystem x = p • cos φ, y = p • sin φ, wobei C ein gegebener positiver Parameter und α ein gegebener Parameter im Intervall 1 < α < 3 ist, dass in den Elementarbereichen $G_{ij}$ des Bereichs $G^{(4)}$ die Phasenfunktion des Optikelements gleich der Summe der Phasenfunktion $\Phi^{(4)}_{ij}(x,y)$ des Vielfachbreitformats ist, das das Bild des Symbols $A_4$ in der Brennweitenebene z=const bildet,

und **dass** bei der Illumination des mikrooptischen Systems durch eine Punktquelle ein Beobachter gleichzeitig die Symbole $A_1$, $A_2$, $A_3$ und $A_4$ erkennt, während sich bei der Neigung des Optikelements die Symbole $A_1$, $A_2$, $A_3$ und $A_4$ über die ganze Fläche des Optikelements längs vier Strahlen bewegen, derart, dass die Winkel zwischen ihnen gleich π/2 betragen.

5. Mikrooptisches System nach einem der Ansprüche 1 bis 4,
   **dadurch gekennzeichnet,**
   **dass** in jedem Elementarbereich ein bestimmter Bereich $G_{ij}$ vorhanden ist, dessen Größe nicht größer als 40 Mikron ist, in dem Beugungsgitter mit verschiedenen Orientierungen und Perioden, die kleiner als 0.8 Mikron sind, aufgezeichnet sind, so dass ein Beobachte bei Beugungswinkeln von größer als 60° ein anderes Farbbild auf der ganzen Fläche des Optikelements erkennt.

6. Mikrooptisches System nach einem der Ansprüche 1 bis 5,
   **dadurch gekennzeichnet,**
   **dass** eine Möglichkeit einer Teilreflektion und einer Teilübertragung des Lichts vorgesehen ist.

**Revendications**

1. Système micro-optique pour l'élaboration d'images visuelles avec effets mouvement est caractérisé de sorte qu'il est formé en qualité d'élément optique de phases à monocouche qui est disposé sur une base dans une région G et à un niveau z=0 d'un système cartésien de coordination Oxyzs qui est réparti dans des plages élémentaires $G_{ij}$ avec i = 1, 2,... et j = 1, 2,...J dont chacune présente une taille pas plus grande que 100 micron, Que la fonction de phases dans les plages élémentaires Gij de l'élément optique dans une somme rectiligne (i+j) est équivaut à la somme de la fonction de phases $\Phi^{(1)}_{ij}(x,y)$ du format d'image à large écran formant l'image du symbole $A_1$ du niveau des distances focales z=const, Que la fonction administrée $h^{(1)}_{ij}(x,y) = C \cdot p^\alpha$ i dans le système de coordination polaire x = p • cos φ, y = p • sin φ où C est un paramètre administré positif et α est un paramètre administré dans l'intervalle 1 < α < 3, Que la fonction de phases dans les plages élémentaires $G_{ij}$ de l'élément optique dans une somme non rectiligne (i+j) est équivaut à la somme de la fonction administrée $h^{(2)}_{ij}(x,y) = -C \cdot p^\alpha$ et la fonction des phases $\varphi^{(2)}_{ij}(x,y)$ du format d'image à large écran formant l'image du symbole $A_2$ du niveau des distances focales z=const, Qu'un observateur lors de l'illumination du système optique reconnaît à travers une source ponctuelle à titre simultané les symboles $A_1$ et $A_2$ et que les symboles $A_1$ et $A_2$ se déplacent lors de l'inclinaison dans les directions opposées via toute la surface de l'élément optique.

2. Système micro-optique selon la revendication 1 est caractérisé de sorte qu'il est formé en qualité d'élément optique de phases à monocouche qui est disposé sur une base dans une région G et à un niveau z=0 d'un système cartésien de coordination Oxyzs qui est réparti dans des plages élémentaires $G_{ij}$ avec i = 1, 2,... et j = 1, 2,...J dont chacune présente une taille pas plus grande que 100 micron, Que la fonction de phases de l'élément optique dans les plages élémentaires $G_{ij}$ dans une somme rectiligne (i+j) est équivaut à la somme de la fonction de phases $\Phi^{(1)}$ij(x,y) du format d'image à large écran formant l'image du symbole $A_1$ du niveau des distances focales z=const,

Que la fonction administrée $h^{(1)}$ij(x,y) = C • $p^\alpha$ cos($2\varphi$) *i* dans le système de coordination polaire x = p • cos $\varphi$, y = p • sin $\varphi$ où C est un paramètre administré positif et $\alpha$ est un paramètre administré dans l'intervalle 1 < $\alpha$ < 3,

Que la fonction de phases de l'élément optique dans les plages élémentaires $G_{ij}$ dans une somme non rectiligne (i+j) est équivaut à la somme de la fonction administrée $h^{(2)}_{ij}$(x,y) = C • $p^\alpha$ sin($2\varphi$) et la fonction des phases $\Phi^{(2)}_{ij}$(x,y) du format d'image à large écran formant l'image du symbole $A_2$ du niveau des distances focales z=const,

Et qu'un observateur lors de l'illumination du système optique reconnaît à travers une source ponctuelle à titre simultané les symboles $A_1$ et $A_2$, tandis que les symboles $A_1$ et $A_2$ se déplacent lors de l'inclinaison dans les directions opposées via toute la surface de l'élément optique.

3. Système micro-optique selon la revendication 1 ou 2 est caractérisé de sorte qu'il est formé en qualité d'élément optique de phases à monocouche qui est disposé sur une base dans une région G et à un niveau z=0 d'un système cartésien de coordination Oxyzs qui est réparti dans des plages élémentaires $G_{ij}$ avec i = 1, 2,... et j = 1, 2,...J dont chacune présente une taille pas plus grande que 100 micron et qui forment les trois plages $G^{(1)}$, $G^{(2)}$ et $G^{(3)}$ ne se croisant pas de sorte qu'il y a toujours dans les plages avoisinantes des plages élémentaires pour chaque plage élémentaire $G_{ij}$ appartenant chacune aux trois plages $G^{(1)}$, $G^{(2)}$ et $G^{(3)}$,

Que la fonction de phases de l'élément optique dans les plages élémentaires $G_{ij}$ de la plage $G^{(1)}$ est équivaut à la somme de la fonction de phases $\Phi^{(1)}$ij(x,y) du format d'image à large écran formant l'image du symbole $A_1$ du niveau des distances focales z=const,

Que la fonction administrée $h^{(1)}$ij(x,y) = C • $p^\alpha$ cos($2\varphi$) dans le système de coordination polaire x = p • cos $\varphi$, y = p • sin $\varphi$ où C est un paramètre administré positif et $\alpha$ est un paramètre administré dans l'intervalle 1 < $\alpha$ < 3,

Que la fonction de phases dans les plages élémentaires $G_{ij}$ de l'élément optique de la plage $G^{(2)}$ est équivaut à la somme de la fonction administrée $h^{(2)}_{ij}$(x,y) = C • $p^\alpha$ cos(2 • ($\varphi+\pi/3$)) et la fonction des phases $\Phi^{(2)}_{ij}$(x,y) du format d'image à large écran formant l'image du symbole $A_2$ du niveau des distances focales z=const,

Que la fonction de phases dans les plages élémentaires $G_{ij}$ de l'élément optique de la plage $G^{(3)}$ est équivaut à la somme de la fonction administrée $h^{(3)}_{ij}$(x,y) = C • $p^\alpha$ cos(2 • ($\varphi-\pi/3$)) et la fonction des phases $\Phi^{(3)}$ij(x,y) du format d'image à large écran formant l'image du symbole $A_3$ du niveau des distances focales z=const,

Et qu'un observateur lors de l'illumination du système micro-optique reconnaît à travers une source ponctuelle à titre simultané les symboles $A_1$ et $A_2$, tandis que les symboles $A_1$ et $A_2$ se déplacent lors de l'inclinaison dans les directions opposées via toute la surface de l'élément optique.

4. Système micro-optique selon l'une des revendications 1 jusqu'à 3 est caractérisé de sorte qu'il est formé en qualité d'élément optique de phases à monocouche qui est disposé sur une base dans une région G et à un niveau z=0 d'un système cartésien de coordination Oxyzs qui est réparti dans des plages élémentaires $G_{ij}$ avec i = 1, 2,... et j = 1, 2,...J dont chacune présente une taille pas plus grande que 100 micron et qui forment les quatre plages $G^{(1)}$, $G^{(2)}$, $G^{(3)}$ et $G^{(4)}$ ne se croisant pas de sorte qu'il y a toujours dans les plages avoisinantes des plages élémentaires pour chaque plage élémentaire $G_{ij}$ appartenant chacune aux quatre plages $G^{(1)}$, $G^{(2)}$, $G^{(3)}$ et $G^{(4)}$,

Que la fonction de phases de l'élément optique dans les plages élémentaires $G_{ij}$ de la plage $G^{(1)}$ est équivaut à la somme de la fonction de phases $\Phi^{(1)}_{ij}$(x,y) du format d'image à large écran formant l'image du symbole $A_1$ du niveau des distances focales z=const,

Que la fonction administrée $h^{(1)}_{ij}$(x,y) = C • $p^\alpha$ cos($2\varphi$) dans le système de coordination polaire x = p • cos $\varphi$, y = p • sin $\varphi$ où C est un paramètre administré positif et $\alpha$ est un paramètre administré dans l'intervalle 1 < $\alpha$ < 3,

que la fonction administrée $h^{(1)}_{ij}$(x,y) = C • $p^\alpha$ cos($2\varphi$) dans le système de coordination polaire x = p • cos $\varphi$, y = p • sin $\varphi$ où C est un paramètre administré positif et $\alpha$ est un paramètre administré dans l'intervalle 1 < $\alpha$ < 3,

Que la fonction de phases dans les plages élémentaires $G_{ij}$ de l'élément optique de la plage $G^{(3)}$ est équivaut à la somme de la fonction administrée $\Phi^{(3)}_{ij}$(x,y) du format d'image à large écran formant l'image du symbole $A_3$ du niveau des distances focales z=const,

que la fonction administrée $h^{(3)}_{ij}$(x,y) = C • $p^\alpha$ cos(2 • ($\varphi+\pi/2$)) dans le système de coordination polaire x = p • cos $\varphi$, y = p • sin $\varphi$ où C est un paramètre administré positif et $\alpha$ est un paramètre administré dans l'intervalle 1 < $\alpha$ < 3, Que la fonction de phases dans les plages élémentaires $G_{ij}$ de l'élément optique de la plage $G^{(4)}$ est équivaut à la fonction des phases $\Phi^{(4)}_{ij}$(x,y) du format d'image à large écran formant l'image du symbole $A_4$ du niveau des distances focales z=const,

Et qu'un observateur lors de l'illumination du système micro-optique reconnaît à travers une source ponctuelle à titre simultané les symboles $A_1$, $A_2$, $A_3$ et $A_4$, tandis que les symboles $A_1$, $A_2$, $A_3$ et $A_4$ se déplacent lors de l'inclinaison via toute la surface de l'élément optique longitudinalement à quatre rayons de sorte que les angles entre eux s'élèvent à $\pi/2$.

**5.** Système micro-optique selon l'une des revendications 1 jusqu'à 4 est caractérisé de sorte qu'une certaine plage $G_{ij}$ est présente dans chaque plage élémentaire dont la taille ne dépassant pas 40 microns où des réseaux de diffraction sont enregistrés présentant une multitude d'orientations et des périodes plus petites que 0.8 microns de sorte qu'un observateur reconnaît une autre image lors d'angles de diffraction ne dépassant pas 60° sur toute la surface de l'élément optique.

**6.** Système micro-optique selon l'une des revendications 1 jusqu'à 5 est caractérisé de sorte qu'une possibilité de réflecteur partiel et de transfert partiel de la lumière est prévue.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

a)

b)

Fig. 20

Fig. 21

A

B   C

β = 10°

A B

C D

β = 10°

A
B C

β = 5°

A B
C D

β = 5°

A
B&C

β = 0°

AB
CD

β = 0°

C B
A

β = –5°

D C
B A

β = –5°

C   B

A

β = –10°

D   C

B   A

β = –10°

a)

b)

Fig. 22

Fig. 23

Fig. 24

Fig. 25

Fig. 26

a)

b)

Fig. 27

Fig. 28

Fig. 29

G

Fig. 30

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- RU 64311
- EA 018419 B1
- EA 017394519 B1
- US 7468842 B
- WO 2014124781 A1

### Non-patent literature cited in the description

- Optical Document Security. Artech House, 2005
- *Method of protection and identification of optical security labels (options) and a device for its implementation,* 2013
- **GONCHARSKY A.V. ; GONCHARSKY A.A.** Computer Optics & Computer Holography. Moscow University Press, 2004
- **L.B.LESEM ; P.M.HIRSCH ; J.A.JR. JORDAN.** The kinoform: a new wavefront reconstruction device. *IBM J. Res. Dev.,* 1969, vol. 13, 105-155
- *Numerical Methods and Programming: New Computing Technologies,* 2008, vol. 9, 405-408
- **GONCHARSKY A.V. ; GONCHARSKY A.A.** Computer Optics & Computer Holography. Moscow University Press, 2004